# EUROPÄISCHE PATENTSCHRIFT

(11) **EP 3 286 032 B1**
(45) Veröffentlichungstag und Bekanntmachung des Hinweises auf die Patenterteilung: **06.05.2020**
(21) Anmeldenummer: 16713877.5
(22) Anmeldetag: 31.03.2016
(51) Int. Cl.: H01M 2/34

(54) **VERFAHREN UND VORRICHTUNG FÜR EIN HOCHVOLT-ENERGIESYSTEM EINES FAHRZEUGS**
METHOD AND APPARATUS FOR A HIGH-VOLTAGE ENERGY SYSTEM OF A VEHICLE
PROCEDE ET DISPOSITIF POUR UN SYSTEME ENERGETIQUE HAUTE TENSION D'UN VEHICULE

(30) Priorität: 21.04.2015 DE 102015207222
(43) Veröffentlichungstag der Anmeldung: 28.02.2018
(73) Patentinhaber: Volkswagen Aktiengesellschaft, 38440 Wolfsburg (DE)
(72) Erfinder: ORTNER, Andreas, 29399 Wahrenholz (DE); SCHAAB, Sebastian, 38102 Braunschweig (DE); BARTOSZEWSKI, Heiner, 38518 Gifhorn (DE); HAHN, Erik, 38550 Isenbüttel (DE)
(86) Internationale Anmeldenummer: PCT/EP2016/057076
(87) Internationale Veröffentlichungsnummer: WO 2016/169743

(56) Entgegenhaltungen:
- EP-A2- 1 052 149
- DE-A1-102011 010 230
- DE-A1-102012 018 338
- DE-A1-102013 220 075
- JP-A- 2006 143 141
- US-A1- 2002 195 290
- Gesamtverband Der Deutschen Versicherungswirtschaft E.V.: "Sicherheit von Hochvolt-Kraftfahrzeugen", http://udv.de/de/fahrzeug/pkw/hochvolt-fah rzeuge/hochvolt-kraftfahrzeuge , 31. März 2012 (2012-03-31), XP055275643, DOI: 10.1007/s12297-011-0162-2 Gefunden im Internet: URL:http://udv.de/download/file/fid/1572 [gefunden am 2016-05-26]

## Beschreibung

Die vorliegende Erfindung betrifft Verfahren und Vorrichtungen für ein Hochvolt-Energiesystem eines Fahrzeugs. Die vorliegende Erfindung betrifft insbesondere Verfahren und Vorrichtungen zum Steuern einer Deaktivierung des Hochvolt-Energiesystems des Fahrzeugs bei einem Unfall.

Unter einem Hochvolt-Energiesystem eines Fahrzeugs wird insbesondere ein Energiesystem verstanden, welches mit Spannungen von mehr als 40 Volt, beispielsweise im Bereich von 400 Volt arbeitet. Insbesondere können hierunter Spannungen der Spannungsklasse B fallen, welche für Gleichspannungen Spannungen zwischen 60 Volt und 500 Volt und für Wechselspannungen Spannungen zwischen 25 Volt und 1000 Volt umfasst. Derartige Spannungen werden insbesondere in Hybrid- und Elektrofahrzeugen verwendet, um beispielsweise einen Elektromotor zu versorgen, welcher dem Vortrieb des Hybrid- oder Elektrofahrzeugs dient. Bei einem Hybrid- oder Elektrofahrzeug, beispielsweise einem Personenkraftwagen oder Lastkraftwagen mit einem Elektromotor als Antriebsquelle, kann ein Defekt an dem Hochvolt-Energiesystem, welches mit einer Spannung von einigen hundert Volt arbeitet, zu einer Gefährdung von Menschen in der Umgebung oder in dem Fahrzeug sowie zu Folgeschäden an dem Fahrzeug führen. Beispielsweise können fehlgeleitete Ströme oder defekte Komponenten in dem Hochvolt-Energiesystem zu Bränden führen oder dazu führen, dass gefährlich hohe Spannungen an Komponenten des Fahrzeugs anliegen, welche von Personen innerhalb oder außerhalb des Fahrzeugs berührt werden können. Aus diesem Grund wird das Hochvolt-Energiesystem eines Fahrzeugs üblicherweise überwacht, um im Fehlerfall das Hochvolt-Energiesystem abzuschalten.

In diesem Zusammenhang offenbart die DE 10 2012 018 338 A1 ein Verfahren zur Deaktivierung von Hochvoltkomponenten eines Fahrzeugs. Bei einem Ausführungsbeispiel wird bei einer Detektion einer Erschütterung des Fahrzeugs ein leichter Unfall von einem schweren Unfall unterschieden. Im Fall eines schweren Unfalls werden die Hochvoltkomponenten ohne weitere Fehleranalyse irreversibel abgeschaltet und im Fall eines leichten Unfalls wird die Fehleranalyse vorgenommen und die Hochvoltkomponenten abgeschaltet, wenn sich bei der Fehleranalyse ein Fehler der Hochvoltkomponente ergibt. Die Erschütterung bzw. ein Unfall oder Crash kann anhand eines Airbag-Sensors erkannt werden.

Der Tagungsband des Gesamtverbands der Deutschen Versicherungswirtschaft e.V.: Sicherheit von Hochvolt-Kraftfahrzeugen (31. März 2012, XP055275643, DOl: 10.1007/s12297-011-0162-2) offenbart in dem Kapitel "Abschaltung des HV-Systems bei einem Unfall" zwei Arten der Abschaltung: bei leichteren Unfällen, bei denen es nur zu einer Auslösung der Gurtstraffer oder der Airbag-Stufe 1 kommt, wird das HV-System reversibel abgeschaltet. Wenn keine Isolationsfehler festgestellt werden, kann das HV-System wieder aktiviert werden. Bei schweren Unfällen wird das HV-System irreversibel abgeschaltet und erst nach einer Untersuchung und Reparatur des HV-Systems durch einen autorisierten Servicebetrieb ist das Wiedereinschalten des HV-Systems möglich.

Die DE 10 2012 015 523 A1 betrifft eine Hochvoltbatterie mit Entlademöglichkeit nach einem Crash. Im Fall eines Crashs wird ein Abschaltsignal als Steuersignal erzeugt. Die eigentliche Crash-Erkennung kann mithilfe eines Airbagauslösesystems erfolgen. In Abhängigkeit von dem Steuersignal wird eine elektrische Verbindung zwischen Batteriezellen und Hochvoltanschluss wahlweise getrennt oder wiederhergestellt.

Die DE 10 2005 036 174 A1 betrifft ein Verfahren zur Auslösung von Batterieabtrennungen in Kraftfahrzeugen. Bei einer ersten Auswertung wird überprüft und entschieden, ob ein Crash vorliegt. Ein Crash-Signal liegt vor, wenn mindestens ein Crash-Sensor ein Crash-Signal liefert. Liegt ein Crash-Signal vor, wird in einer weiteren Auswertung überprüft, ob ein aktueller Stromwert eines Batteriesensors über einem Schwellenwert liegt. Wird dieser vorgegebene Schwellenwert überschritten, wird ein Trennmittel aktiviert und die Batterie von einer zu trennenden Leitung abgekoppelt.

Wie aus den vorhergehenden Ausführungen ersichtlich ist, ist es aus Sicherheitsgründen erforderlich, nach einem Unfallereignis das Hochvolt-Energiesystem eines Fahrzeugs zu diagnostizieren und abzuschalten, wenn ein sicherheitsrelevanter Fehler erkannt wird. Die Abschaltung des Hochvolt-Energiesystems sowie gegebenenfalls eines Antriebs des Fahrzeugs wird im Allgemeinen irreversibel durchgeführt, d.h. die Abschaltung kann durch den Benutzer des Fahrzeugs nicht rückgängig gemacht werden, sondern nur in einer Werkstatt, nachdem das Fahrzeug sowie das Hochvolt-Energiesystem wieder in einen fehlerfreien Zustand versetzt wurden. Durch das irreversible Abschalten des Hochvolt-Energiesystems ist das Fahrzeug nicht mehr in der Lage, sich aus eigenem Antrieb heraus zu bewegen. Das Fahrzeug bleibt somit liegen. Ein Liegenbleiben des Fahrzeugs ist aus Sicht eines Fahrzeugbenutzers äußerst unerwünscht, da in diesem Fall das Fahrzeug abgeschleppt werden muss und zumindest für eine bestimmte Zeit nicht benutzbar ist.

Aufgabe der vorliegenden Erfindung ist es daher, ein Fahrzeug mit einem Hochvolt-Energiesystem derart auszugestalten, dass einerseits ein höchstes Maß an Sicherheit für Personen im Bereich des Fahrzeugs sowie für das Fahrzeug selbst gewährleistet wird und andererseits ein unnötiges Liegenbleiben des Fahrzeugs vermieden wird.

Diese Aufgabe wird durch ein Verfahren für ein Hochvolt-Energiesystem eines Fahrzeugs nach Anspruch 1 und eine Überwachungsvorrichtung für ein Hochvolt-Energiesystem eines Fahrzeugs nach Anspruch 6 gelöst. Die abhängigen Ansprüche definieren bevorzugte und vorteilhafte Ausführungsformen der Erfindung.

Gemäß der vorliegenden Erfindung wird ein Verfahren für ein Hochvolt-Energiesystem eines Fahrzeugs bereitgestellt, bei dem ein Vor-Unfall-Fehlerzustand, ein Nach-Unfall-Fehlerzustand und ein Unfallereignis bestimmt werden. Der Vor-Unfall-Fehlerzustand gibt aktuell bestehende Fehler des Hochvolt-Energiesystems vor einem Zeitpunkt des Unfallereignisses an. Der Nach-Unfall-Fehlerzustand gibt aktuell bestehende Fehler des Hochvolt-Energiesystems nach dem Zeitpunkt des Unfallereignisses an. In Abhängigkeit von dem Unfallereignis, dem Vor-Unfall-Fehlerzustand und dem Nach-Unfall-Fehlerzustand wird das Hochvolt-Energiesystem deaktiviert. Anders ausgedrückt wird eine Änderung des Fehlerzustands des Hochvolt-Energiesystems durch bzw. während des Unfallereignisses bestimmt und abhängig davon das Hochvolt-Energiesystem deaktiviert. Das Hochvoltenergiesystem wird deaktiviert, wenn der Nach-Unfall-Fehlerzustand mindestens einen Fehler des Hochvoltenergiesystems angibt, welcher über die Fehler des Vor-Unfall-Fehlerzustands hinausgeht. Das Hochvoltenergiesystem wird nicht deaktiviert, wenn der Fehler des Hochvoltenergiesystems im unfallfreien Betrieb des Fahrzeugs auftritt. Wenn beispielsweise vor dem Unfallereignis kein Fehler des Hochvolt-Energiesystems vorlag und nach dem Unfall ein oder mehrere Fehler bestehen, liegen unfallbedingte Fehler des Hochvolt-Energiesystems vor, woraufhin das Hochvolt-Energiesystem deaktiviert oder abgeschaltet werden kann. Wenn hingegen vor dem Unfallereignis bereits ein Fehler des Hochvolt-Energiesystems vorliegt, welcher jedoch so geringfügig ist, dass keine Abschaltung des Hochvolt-Energiesystems erforderlich ist, und wenn ferner festgestellt wird, dass auch nach dem Unfallereignis keine weiteren gravierenden Fehler an dem Hochvolt-Energiesystem aufgetreten sind, so kann die Deaktivierung des Hochvolt-Energiesystems vermieden werden, da in diesem Fall durch das Unfallereignis keine zusätzlichen gravierenden Fehler an dem Hochvolt-Energiesystem aufgetreten sind. Dadurch kann ein Liegenbleiben des Fahrzeugs nach einem Bagatellunfall, bei welchem das Hochvolt-Energiesystem nicht in Mitleidenschaft gezogen wurde, vermieden werden.

Gemäß einer Ausführungsform wird der Vor-Unfall-Fehlerzustand bestimmt, indem bei einem Starten des Fahrzeugs aktuell bestehende Fehler des Hochvolt-Energiesystems erfasst werden. Alternativ oder zusätzlich kann der Vor-Unfall-Fehlerzustand bestimmt werden, indem aktuell bestehende Fehler des Hochvolt-Energiesystems zyklisch erfasst werden. Dem Vor-Unfall-Fehlerzustand werden die aktuell bestehenden Fehler des Hochvolt-Energiesystems zugeordnet, welche zu einem Zeitpunkt in einem vorgegebenen zeitlichen Mindestabstand vor dem Unfallereignis bestanden. Dadurch kann sichergestellt werden, dass der Vor-Unfall-Fehlerzustand keine Fehler anzeigt, welche durch das Unfallereignis bewirkt wurden, selbst wenn das Unfallereignis zeitlich verzögert erfasst wurde. Beispielsweise kann auf diese Art und Weise sichergestellt werden, dass der Vor-Unfall-Fehlerzustand nur bestehende Fehler umfasst, welche mindestens eine oder fünf Sekunden vor dem Unfallereignis bestanden.

Bei einer weiteren Ausführungsform umfassen die aktuell bestehenden Fehler beispielsweise einen Isolationsfehler, welcher einen Fehler in einer elektrischen Isolation einer elektrischen Hochvoltkomponente des Hochvolt-Energiesystems angibt. Die elektrische Hochvoltkomponente kann beispielsweise eine Hochvoltleitung, eine Hochvolt-Steuereinrichtung, eine Hochvoltbatterie oder einen Hochvolt-Antriebsmotor umfassen. Derartige Isolationsfehler können beispielsweise mithilfe geeigneter Sensoren, welche eine Isolationsmessung durchführen, bestimmt werden. Ein Isolationsfehler kann beispielsweise auch ohne ein Unfallereignis an dem Fahrzeug auftreten, wenn beispielsweise eine Isolation einer Hochvoltleitung von einem Nagetier beschädigt wird. In diesem Fall ist im Allgemeinen keine Abschaltung des Hochvolt-Energiesystems erforderlich, da keine Kurzschlussgefahr besteht und die Hochvoltleitung im Allgemeinen für einen Benutzer des Fahrzeugs unzugänglich im Fahrzeug angeordnet ist. Bei einem Unfall kann ein Isolationsfehler auftreten, wenn beispielsweise durch eine Verformung von Karosseriekomponenten des Fahrzeugs die Isolation der Hochvoltleitung beschädigt wird. In diesem Fall kann ein Kurzschluss zwischen Karosserie und Hochvoltleitung auftreten, wodurch gefährlich hohe Berührspannungen an der Karosserie des Fahrzeugs auftreten können. War der Isolationsfehler daher bereits vor dem Unfall vorhanden, ist auch nach dem Unfall keine Deaktivierung des Hochvolt-Energiesystems erforderlich, wohingegen sehr wohl eine Deaktivierung des Hochvolt-Energiesystems erforderlich ist, wenn der Vergleich von Vor-Unfall-Fehlerzustand mit dem Nach-Unfall-Fehlerzustand ergibt, dass der Isolationsfehler durch das Unfallereignis bewirkt wurde.

Alternativ oder zusätzlich kann der aktuell bestehende Fehler einen Steckverbindungsfehler umfassen, welcher einen Fehler bei einer Stechverbindung angibt, die eine elektrische Hochvoltkomponente des Hochvolt-Energiesystems mit einer weiteren elektrischen Hochvoltkomponente des Hochvolt-Energiesystems koppelt. Beispielsweise kann die Steckverbindung eine Hochvoltenergieleitung mit der Hochvoltbatterie oder dem Hochvoltantriebsmotor koppeln. Steckverbindungsfehler können beispielsweise durch überprüfen einer Niedervoltverbindung, welche zusammen mit einer Hochvoltverbindung über den gleichen Steckverbinder gekoppelt wird, festgestellt werden. Auch bei einem Steckverbindungsfehler gilt, dass ein derartiger Fehler im unfallfreien Betrieb des Fahrzeugs im Allgemeinen keine Gefahr bedeutet, beispielsweise wenn ein Steckverbinder von einem Batteriepaket beispielsweise durch Vibrationen getrennt wird. In diesem Fall geht von dem Steckverbindungsfehler im Allgemeinen keine Gefahr für das Fahrzeug oder für Insassen aus. Tritt der Steckverbindungsfehler hingegen im Zusammenhang mit einem Unfall auf, kann der Steckverbinder durch die mechanischen Belastungen während des Unfalls derart beschädigt oder verlagert worden sein, dass daraus eine Gefahr für das Fahrzeug oder Insassen droht. Daher ist das Hochvolt-Energiesystem vorteilhafterweise nur dann zu deaktivieren, wenn der Steckverbindungsfehler in Zusammenhang mit dem Unfallereignis aufgetreten ist. Anderenfalls kann das Fahrzeug weiter betrieben werden, sodass ein Liegenbleiben vermieden werden kann. Alternativ oder zusätzlich kann der aktuell bestehende Fehler einen Leitungsunterbrechungsfehler umfassen, welcher beispielsweise eine Unterbrechung einer Hochvoltleitung des Hochvolt-Energiesystems angibt. Leitungsunterbrechungsfehler können beispielsweise mithilfe geeigneter Sensoren zur Überwachung von einem Strom oder einer Spannung auf der Hochvoltleitung ermittelt werden. Im unfallfreien Betrieb des Fahrzeugs können Leitungsunterbrechungsfehler vielfältige Ursachen haben, beispielsweise können sie durch einen abgefallenen Stecker oder verschmutzte oder verschmorte Kontakte in Steckverbindern oder Schaltvorrichtungen auftreten. Ein Deaktivieren des Hochvolt-Energiesystems im unfallfreien Zustand des Fahrzeugs ist daher nicht erforderlich. Tritt der Leitungsunterbrechungsfehler hingegen durch ein Unfallereignis auf, wie es durch Vergleichen des Vor-Unfall-Fehlerzustands mit dem Nach-Unfall-Fehlerzustand erkannt werden kann, ist das Hochvolt-Energiesystem zu deaktivieren, um zu vermeiden, dass eine durch den Unfall durchgetrennte Hochvoltleitung einen Kurzschluss erzeugt oder eine Hochspannung an Komponenten anlegt, welche von Personen in dem Fahrzeug oder um das Fahrzeug herum berührt werden können. Weiterhin können alternativ oder zusätzlich die aktuell bestehenden Fehler einen Timeout-Fehler umfassen, welcher anzeigt, dass eine elektrische Hochvoltkomponente nach einer Ansteuerung nicht innerhalb einer vorgegebenen Zeit gemäß der Ansteuerung reagiert. Derartige Timeout-Fehler werden typischerweise von Steuervorrichtungen erkannt, welche Reaktionen der Hochvoltkomponente auf eine Ansteuerung der Hochvoltkomponente erfassen, um die Hochvoltkomponenten beispielsweise zu regeln. Die Hochvoltkomponente kann beispielsweise den Antriebsmotor des Fahrzeugs oder eine Klimatisierungsvorrichtung des Fahrzeugs umfassen. Das Ansteuern der Hochvoltkomponente kann beispielsweise mithilfe eines Kommunikationsbusses des Fahrzeugs, beispielsweise mit einem CAN-Bus, erfolgen. Ebenso kann die Reaktion der Hochvoltkomponente mittels des Bussystems übertragen werden. Wenn nicht innerhalb der vorgegebenen Zeit, beispielsweise einige Millisekunden oder einer Sekunde, eine entsprechende Reaktion von der Hochvoltkomponente erfasst wird, liegt der Timeout-Fehler vor. Im unfallfreien Betrieb kann dies beispielsweise aufgrund einer Leitungsunterbrechung des Bussystems oder einer Störung einer Steuervorrichtung der elektrischen Hochvoltkomponente auftreten. Eine Deaktivierung des Hochvolt-Energiesystems bei einem Timeout-Fehler im unfallfreien Fall ist daher im Allgemeinen nicht erforderlich. Tritt der Timeout-Fehler jedoch in Verbindung mit einem Unfallereignis auf, kann das Hochvolt-Energiesystem deaktiviert werden, um beispielsweise zu verhindern, dass eine Gefährdung von einer durch den Unfall beschädigten Hochvoltkomponente ausgeht.

Das Deaktivieren des Hochvolt-Energiesystems kann beispielsweise ein irreversibles Abschalten des Hochvolt-Energiesystems umfassen. Irreversibles Abschalten des Hochvolt-Energiesystems bedeutet, dass das Hochvolt-Energiesystem nicht mittels einer Bedienung durch einen Benutzer des Fahrzeugs wieder aktivierbar ist. Das Hochvolt-Energiesystem kann daher nur von einem Fachmann, beispielsweise in einer Werkstatt, wieder aktiviert werden. Das Abschalten des Hochvolt-Energiesystems kann beispielsweise ein Entkoppeln von Hochvoltbatterien von einem Hochvoltenergienetz des Fahrzeugs umfassen. Alternativ oder zusätzlich kann das Deaktivieren des Hochvolt-Energiesystems ein irreversibles Abschalten eines mit dem Hochvolt-Energiesystem gekoppelten Antriebsmotors des Fahrzeugs umfassen. Dazu wird der Antriebsmotor derart abgeschaltet, dass er nicht mittels einer Bedienung durch einen Benutzer des Fahrzeugs wieder aktivierbar ist, sondern nur durch einen Fachmann, beispielsweise durch Austausch von nicht wieder einschaltbaren elektrischen Trennvorrichtungen, aktivierbar ist. Durch das Trennen der Batterie des Fahrzeugs von dem Hochvolt-Energiesystem kann verhindert werden, dass die Batterie durch einen Kurzschluss überlastet wird und dadurch überhitzt, explodiert oder brennt. Durch das Abschalten des Antriebsmotors kann verhindert werden, dass im Fehlerfall Rekuperationsenergie des Antriebsmotors durch das Hochvolt-Energiesystem eingeleitet wird und ferner kann verhindert werden, dass der Antriebsmotor mit Energie versorgt wird, falls die Abschaltung der Batterie aufgrund eines Defekts nicht möglich ist.

Gemäß einer Ausführungsform umfasst das Bestimmen des Unfallereignisses das Erfassen einer Beschleunigung des Fahrzeugs und ein Vergleichen der erfassten Beschleunigung mit einem vorgegebenen Beschleunigungsschwellenwert. Die Beschleunigung des Fahrzeugs kann beispielsweise mithilfe von Beschleunigungssensoren in dem Fahrzeug erfasst werden, welche beispielsweise für eine Airbagauslösung oder für ein elektronisches Stabilitätsprogramm des Fahrzeugs ohnehin in dem Fahrzeug vorhanden sind. Dadurch können zusätzliche Kosten vermieden werden. Durch Vergleichen der erfassten Beschleunigung mit dem vorgegebenen Beschleunigungsschwellenwert kann verhindert werden, dass verhältnismäßig kleine Einwirkungen auf das Fahrzeug als Unfallereignis bestimmt werden. Dadurch kann ein unnötiges Abschalten des Hochvolt-Energiesystems und somit ein unnötiges Liegenbleiben des Fahrzeugs bei kleinen Unfällen verhindert werden. Ferner kann durch Vergleichen der erfassten Beschleunigung mit einem weiteren vorgegebenen Beschleunigungsschwellenwert ein schwerer Unfall erkannt werden, bei dem unabhängig von dem Vor-Unfall-Fehlerzustand, also ausschließlich aufgrund des Nach-Unfall-Fehlerzustands, das Hochvolt-Energiesystem deaktiviert wird, oder sogar unabhängig von einem aktuellen Fehlerzustand das Hochvolt-Energiesystem deaktiviert wird.

Wie zuvor beschrieben, wird das Hochvolt-Energiesystem in Abhängigkeit von dem Unfallereignis, dem Vor-Unfall-Fehlerzustand und dem Nach-Unfall-Fehlerzustand deaktiviert. Insbesondere kann das Hochvolt-Energiesystem beispielsweise nur dann deaktiviert werden, wenn der Nach-Unfall-Fehlerzustand mindestens einen Fehler des Hochvolt-Energiesystems angibt, welcher über die Fehler des Vor-Unfall-Fehlerzustands hinausgeht. Anders ausgedrückt wird das Hochvolt-Energiesystem nur dann deaktiviert, wenn nach dem Unfallereignis mindestens ein Fehler vorliegt, welcher vor dem Unfallereignis noch nicht vorlag. Dadurch kann sichergestellt werden, dass das Hochvolt-Energiesystem auf jeden Fall abgeschaltet wird, wenn der Unfall einen Einfluss auf das Hochvolt-Energiesystem hatte. Ein Liegenbleiben des Fahrzeugs wird verhindert, wenn das Hochvolt-Energiesystem durch den Unfall nicht beeinträchtigt wurde.

Im Rahmen der vorliegenden Erfindung wird weiterhin eine Überwachungsvorrichtung für ein Hochvolt-Energiesystem eines Fahrzeugs bereitgestellt. Die Überwachungsvorrichtung umfasst einen Unfallsensor zum Bestimmen eines Unfallereignisses. Der Unfallsensor kann beispielsweise einen Beschleunigungssensor umfassen, mit welchem Beschleunigungen in verschiedenen Richtungen erfasst werden können, woraus auf ein Unfallereignis geschlossen werden kann, bei welchem das Fahrzeug und insbesondere das Hochvolt-Energiesystem des Fahrzeugs möglicherweise beschädigt wurde. Der Unfallsensor kann beispielsweise einen Airbag-Sensor umfassen, welcher im Falle eines Unfalls eine Airbagauslösung steuert. Die Überwachungsvorrichtung umfasst weiterhin einen Fehlersensor zum Erfassen von aktuell bestehenden Fehlern des Hochvolt-Energiesystems. Die Überwachungsvorrichtung kann beispielsweise mehrere Fehlersensoren umfassen, um beispielsweise Isolationsfehler, Steckverbindungsfehler, Leitungsunterbrechungsfehler oder Timeout-Fehler des Hochvolt-Energiesystems zu erfassen. Eine Verarbeitungsvorrichtung der Überwachungsvorrichtung ist mit dem Unfallsensor und dem Fehlersensor gekoppelt und in der Lage, einen Vor-Unfall-Fehlerzustand und einen Nach-Unfall-Fehlerzustand zu bestimmen. Der Vor-Unfall-Fehlerzustand zeigt aktuell bestehende Fehler des Hochvolt-Energiesystems vor dem Zeitpunkt des Unfallereignisses auf. Ebenso zeigt der Nach-Unfall-Fehlerzustand aktuell bestehende Fehler des Hochvolt-Energiesystems nach dem Zeitpunkt des Unfallereignisses auf. Die Verarbeitungsvorrichtung ist ferner in der Lage, in Abhängigkeit von dem Unfallereignis, dem Vor-Unfall-Fehlerzustand und dem Nach-Unfall-Fehlerzustand das Hochvolt-Energiesystem zu deaktivieren. Das Hochvoltenergiesystem wird deaktiviert, wenn der Nach-Unfall-Fehlerzustand mindestens einen Fehler des Hochvoltenergiesystems angibt, welcher über die Fehler des Vor-Unfall-Fehlerzustands hinausgeht. Das Hochvoltenergiesystem wird nicht deaktiviert, wenn der Fehler des Hochvoltenergiesystems im unfallfreien Betrieb des Fahrzeugs auftritt. Die Überwachungsvorrichtung ist daher zur Durchführung des zuvor beschriebenen Verfahrens oder einer seiner Ausführungsformen geeignet und umfasst daher auch die Vorteile des zuvor beschriebenen Verfahrens.

Bei einem weiteren Verfahren für ein Hochvolt-Energiesystem eines Fahrzeugs wird bestimmt, ob ein erster Fehler des Hochvolt-Energiesystems vorliegt, und ob ein zweiter Fehler des Hochvolt-Energiesystems vorliegt. In Abhängigkeit von dem ersten Fehler und von dem zweiten Fehler wird das Hochvolt-Energiesystem nur dann deaktiviert, wenn der erste Fehler und der zweite Fehler zumindest zeitweise gleichzeitig vorliegen. Anders ausgedrückt führt ein Vorliegen von nur dem ersten Fehler noch nicht zu einer Deaktivierung des Hochvolt-Energiesystems, ebenso wie ein Vorliegen von nur dem zweiten Fehler. Erst wenn der erste Fehler und der zweite Fehler gleichzeitig vorliegen, wird das Hochvolt-Energiesystem deaktiviert. Es ist natürlich klar, dass andere Fehler als der erste Fehler und der zweite Fehler unabhängig von dem zuvor beschriebenen Verfahren zur Deaktivierung des Hochvolt-Energiesystems führen können. Dieses Verfahren ist insbesondere dann vorteilhaft, wenn der erste Fehler und der zweite Fehler jeweils für sich genommen als nicht besonders schwerwiegend erachtet werden, in Kombination jedoch schwerwiegende Folgen haben können.

Beispielsweise kann das Fahrzeug mit einem sogenannten Hochvolt(HV)-lnterlock die korrekte Verbindung von Steckverbindungen im Hochvoltstromkreis überwachen. Um dies zu erreichen, verfügt die HV-Anlage über eine sogenannte Pilotlinie. Dabei handelt es sich um eine mit 12-V-Bordspannung beaufschlagte Reihenschaltung, die von HV-Steckverbindung zu HV-Steckverbindung verläuft. Wird der Stromkreis der Pilotlinie durch Abziehen einer der Steckverbindungen und das daraus resultierende Trennen der Pilotkontakte im Stecker unterbrochen, so wird das von einer HV-Steuereinheit erkannt. Beispielsweise kann der erste Fehler ein Pilotlinienfehler sein und der zweite Fehler eine erkannte offene HV Leitung sein. Die Kombination beider Fehler ist ein Indiz für eine beschädigte oder durchtrennte Leitung, die beispielsweise im Motorraum nicht mehr fixiert ist. Die Folge wäre, dass die Leitung im Motorraum Folgeschäden verursacht. Ein Pilotlinienfehler führt bei bestimmten Bedingungen nicht zur Abschaltung des HV Systems, da keine unmittelbare Gefährdung vorliegt. Ebenso wird das HV System bei einem EoHVL Fehler (Erkennung offener HV Leitungen) nicht abgeschaltet, da eine Gefährdung, wie z.B. eine unfixierte Leitung, nicht eindeutig abgeleitet wird. Zudem lässt eine erkannte offene HV-Leitung nicht eindeutig auf eine Unterbrechung außerhalb der Komponente schließen und somit lässt sich die Gefährdungseinschätzung nicht hinreichend sicher bestimmen.

Dieses Verfahren kann ferner in vorteilhafter Weise mit den zuvor beschriebenen unfallereignisbasierten Verfahren kombiniert werden. Beispielsweise wird das Hochvolt-Energiesystem nur dann deaktiviert, wenn ein erster Fehler und ein zweiter Fehler, welche vor einem Unfallereignis nicht vorlagen, nach einem Unfallereignis vorliegen. Das Hochvolt-Energiesystem wird hingegen nicht deaktiviert, wenn nach dem Unfall nur der erste Fehler oder nur der zweite Fehler auftritt.

Eine weitere Überwachungsvorrichtung für ein Hochvolt-Energiesystem eines Fahrzeugs kann mindestens einen Fehlersensor zum Erfassen von aktuell bestehenden Fehlern des Hochvolt-Energiesystems und eine Verarbeitungsvorrichtung umfassen. Die Verarbeitungsvorrichtung ist mit dem Fehlersensor gekoppelt und in der Lage, zu bestimmen, ob ein erster Fehler des Hochvolt-Energiesystems vorliegt und ob ein zweiter Fehler des Hochvolt-Energiesystems vorliegt. Ferner ist die Verarbeitungsvorrichtung derart ausgestaltet, dass sie das Hochvolt-Energiesystem in Abhängigkeit von dem ersten Fehler und dem zweiten Fehler nur dann deaktiviert, wenn der erste Fehler und der zweite Fehler zumindest zeitweise gleichzeitig vorliegen. Die Überwachungsvorrichtung ist daher zur Durchführung des zuvor beschriebenen Verfahrens geeignet und umfasst daher auch die zuvor beschriebenen Vorteile.

Die vorliegende Erfindung betrifft ferner ein Fahrzeug mit einem Hochvolt-Energiesystem und einer der zuvor beschriebenen Überwachungsvorrichtungen. Das Fahrzeug ist insbesondere ein Elektrofahrzeug oder ein Hybridfahrzeug mit mindestens einem Elektromotor zum Antreiben des Fahrzeugs. Das Hochvolt-Energiesystem betrifft beispielsweise den Elektromotor, eine Batterie, insbesondere eine Hochvoltbatterie zur Speicherung von elektrischer Energie für den Elektromotor, Hochvoltleitungen zum Verbinden der Batterie mit dem Elektromotor sowie Steuerkomponenten zur Steuerung des Elektromotors und der Batterie, beispielsweise zum Laden und Entladen der Batterie.

Obwohl die zuvor beschriebenen Ausführungsformen unabhängig voneinander beschrieben wurden, können die verschiedenen Ausführungsformen beliebig miteinander kombiniert werden.

Die vorliegende Erfindung wird nachfolgend unter Bezugnahme auf die Zeichnungen im Detail beschrieben werden.
Fig. 1 zeigt schematisch ein Fahrzeug gemäß einer Ausführungsform der vorliegenden Erfindung.
Fig. 2 zeigt Verfahrensschritte eines Verfahrens gemäß einer Ausführungsform der vorliegenden Erfindung.
Figuren 3 und 4 zeigen zeitliche Abläufe einer Hochvoltabschaltung gemäß einer Ausführungsform der vorliegenden Erfindung.
Fig. 5 zeigt zeitliche Abläufe einer Hochvoltabschaltung.

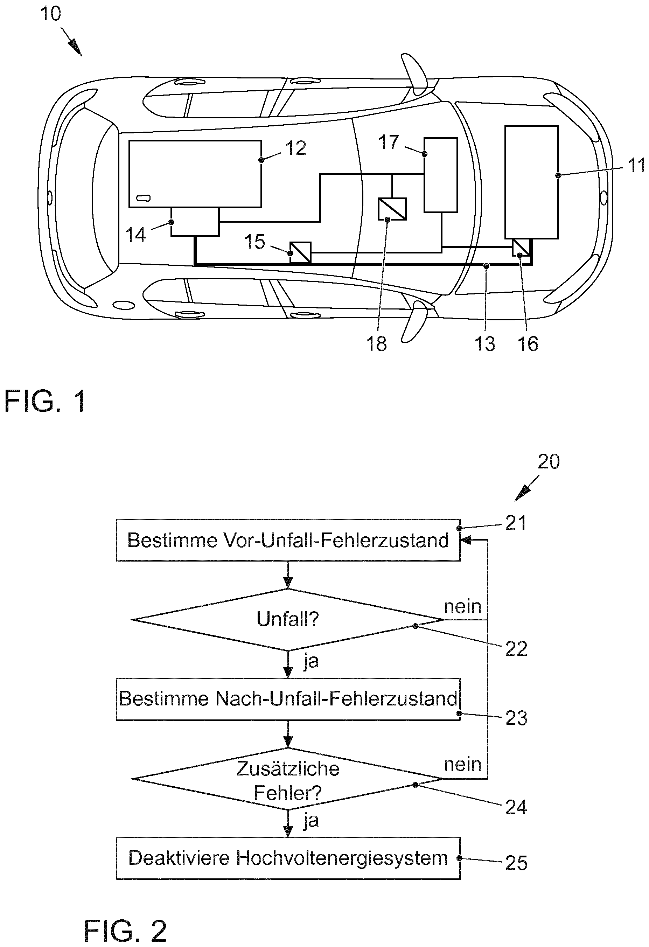

Fig. 1 zeigt ein Fahrzeug 10, beispielsweise ein Elektrofahrzeug oder ein Hybridfahrzeug mit einem Elektromotor, mit einem Hochvolt-Energiesystem. Das Hochvolt-Energiesystem umfasst einen elektrischen Antriebsmotor 11, einen elektrischen Energiespeicher 12, beispielsweise eine wiederaufladbare Batterie, ein elektrisches Hochvoltnetz, welches zumindest den elektrischen Energiespeicher 12 und den elektrischen Antriebsmotor 11 koppelt, und eine Deaktivierungsvorrichtung 14 zum Deaktivieren des Hochvolt-Energiesystems. Die Deaktivierungsvorrichtung 14 kann beispielsweise eine elektrische Trennvorrichtung sein, welche den elektrischen Energiespeicher 12 von dem Hochvoltnetz trennt. Das Hochvoltnetz kann mehrere Hochvoltleitungen 13 umfassen, welche Hochvoltenergiekomponenten, wie z.B. den Antriebsmotor 11 und eine nicht gezeigte Klimaanlage des Fahrzeugs 10 mit elektrischer Energie aus dem elektrischen Energiespeicher 12 versorgen. Das Hochvolt-Energiesystem kann beispielsweise mit einer Spannung von einigen zig oder einigen hundert Volt arbeiten, beispielsweise mit einer Spannung von 400 Volt. Bei einem Fehler des Hochvolt-Energiesystems können für einen Menschen gefährlich hohe Spannungen an Komponenten des Fahrzeugs auftreten, welche von einem Fahrzeugbenutzer oder Insassen des Fahrzeugs berührt werden können. Ferner stellt der Energiespeicher 12 neben der hohen Spannung auch verhältnismäßig hohe Ströme bereit, sodass Fehlerströme, beispielsweise Kurzschlüsse, zu einem Brand an Komponenten des Hochvolt-Energiesystems führen können. Daher umfasst das Fahrzeug 10 eine Überwachungsvorrichtung für das Hochvolt-Energiesystem, um Fehler in dem Hochvolt-Energiesystem zu erfassen und das Hochvolt-Energiesystem gegebenenfalls mithilfe der Deaktivierungsvorrichtung 14 zu deaktivieren. Die Überwachungsvorrichtung umfasst Fehlersensoren, um aktuell bestehende Fehler des Hochvolt-Energiesystems zu erfassen. Beispielsweise umfasst die Überwachungsvorrichtung einen Fehlersensor 15 zum Erfassen eines Isolationsfehlers von beispielsweise einer elektrischen Isolation der Hochvoltleitung 13, und einen Fehlersensor 16, um beispielsweise einen Steckverbindungsfehler an einer Steckverbindung zwischen der Hochvoltleitung 13 und dem Antriebsmotor 11 zu erfassen. Um einen Steckverbindungsfehler zu erfassen, können beispielsweise in der Steckverbindung neben Kontakten der Hochvoltleitung 13 auch Kontakte von Niedervoltleitungen vorgesehen sein, um über eine Überprüfung eines Stromflusses durch die Niedervoltkontakte feststellen zu können, ob die Steckverbindung ordnungsgemäß ausgeführt ist. Der Fehlersensor 15 kann beispielsweise mithilfe einer Widerstandsmessung einen Isolationsfehler in beispielsweise der Hochvoltleitung 13 oder an einer anderen Komponente des Hochvolt-Energiesystems bestimmen. Weitere Fehlersensoren können vorgesehen sein, um beispielsweise Leitungsunterbrechungsfehler in einer Hochvoltleitung des Hochvolt-Energiesystems festzustellen, oder um einen sogenannten Timeout-Fehler festzustellen, welcher anzeigt, dass eine elektrische Hochvoltkomponente nach einer Ansteuerung nicht innerhalb einer vorgegebenen Zeit gemäß der Ansteuerung reagiert. Ein Timeout-Fehler kann beispielsweise einen Defekt der Hochvoltkomponente anzeigen, wenn beispielsweise über einen Kommunikationsbus, beispielsweise einen sogenannten CAN-Kommunikationsbus, ein Befehl an diese Komponente geschickt wird und nicht innerhalb einer vorbestimmten Zeit eine Rückantwort von der Komponente erhalten wird. Die Fehlersensoren 15, 16 sowie weitere Fehlersensoren sind mit einer Verarbeitungsvorrichtung 17 der Überwachungsvorrichtung gekoppelt. Die Verarbeitungsvorrichtung 17 ist weiterhin mit einem Unfallsensor 18, beispielsweise einem Beschleunigungssensor des Fahrzeugs 10, gekoppelt, um ungewöhnlich starke Beschleunigungen, welche beispielsweise bei einem Unfall des Fahrzeugs 10 auftreten können, zu bestimmen. Der Unfallsensor 18 kann beispielsweise ein Beschleunigungssensor sein, welcher auch für eine Airbagauslösung in dem Fahrzeug 10 verwendet wird. Die Verarbeitungsvorrichtung 17 bestimmt in Abhängigkeit von Informationen der Fehlersensoren 15, 16 und des Unfallsensors 18, ob das Hochvolt-Energiesystem zu aktivieren ist und steuert die Deaktivierungsvorrichtung 14 dementsprechend an. Die Arbeitsweise der Verarbeitungsvorrichtung 17 wird nachfolgend unter Bezugnahme auf die Figuren 2-5 anhand verschiedener Beispiele im Detail beschrieben werden.

Üblicherweise wird nach einem Unfallereignis, einem sogenannten Crash-Ereignis, mit geringer Unfallschwere das Hochvolt-Energiesystem des Fahrzeugs 10 auf Fehler diagnostiziert. Wird während der Diagnose ein Fehler erkannt, erfolgt eine irreversible Abschaltung des Hochvolt-Energiesystems und der Antrieb, beispielsweise der Antriebsmotor 11, wird deaktiviert. Es kommt daher zu einem Liegenbleiben des Fahrzeugs. Es gibt jedoch auch Fehler, welche unabhängig von einem Unfall an dem Hochvolt-Energiesystem auftreten können. Um ein unnötiges Liegenbleiben des Fahrzeugs zu vermeiden, führen Fehler, welche unabhängig von einem Unfall des Fahrzeugs auftreten, nicht zwangsweise zu einer irreversiblen Abschaltung des Hochvolt-Energiesystems. Tritt beispielsweise ein Isolationsfehler an der Hochvoltleitung 13 im normalen unfallfreien Betrieb des Fahrzeugs auf, so wird das Hochvolt-Energiesystem im Allgemeinen nicht deaktiviert. Der Grund für das Auftreten des Isolationsfehlers kann beispielsweise ein Marderschaden an der Hochvoltleitung 13 oder das Eindringen von Feuchtigkeit in eine Steckverbindung an der Hochvoltleitung 13 sein. Diese Fehler sind zwar baldmöglichst zu beseitigen, sollten jedoch nicht zu einem Liegenbleiben des Fahrzeugs 10 führen, da keine unmittelbare Gefahr für einen Insassen des Fahrzeugs oder für das Fahrzeug selbst besteht. Wird hingegen ein derartiger Isolationsfehler nach einem Unfall diagnostiziert, kann dieser Isolationsfehler beispielsweise durch eine Verformung von Karosseriebauteilen aufgetreten sein, wodurch die Isolation der Hochvoltleitung 13 beschädigt wurde. In diesem Fall besteht die Gefahr, dass eine gefährlich hohe Spannung an der Karosserie anliegt, sodass eine irreversible Abschaltung des Hochvolt-Energiesystems für einen Personenschutz erforderlich sein kann. Wenn der Isolationsfehler jedoch vor dem Unfall bereits bestanden hat, führt die Abschaltung des Hochvolt-Energiesystems aufgrund des Isolationsfehlers nach dem Unfall zu einem unnötigen Liegenbleiben des Fahrzeugs, was insbesondere bei einer leichten Beschädigung des Fahrzeugs für den Fahrzeugbenutzer ungünstig sein kann, da er dann, obwohl sein Fahrzeug prinzipiell noch betriebstüchtig wäre, nicht weiterfahren kann und zusätzliche Kosten für die Aktivierung der irreversiblen Abschaltung entstehen können.

Um dieses unnötige Deaktivieren des Hochvolt-Energiesystems zu vermeiden, führt die Verarbeitungsvorrichtung 17 die Verfahrensschritte 21-25 des Verfahrens 20 der Fig. 2 aus. In Schritt 21 wird ein Fehlerzustand des Hochvolt-Energiesystems vor einem Unfallereignis bestimmt. Dieser Fehlerzustand wird nachfolgend als Vor-Unfall-Fehlerzustand bezeichnet. Der Vor-Unfall-Fehlerzustand kann beispielsweise beim Einschalten der Zündung des Fahrzeugs, kontinuierlich oder in festen Zeitabständen erfasst und gespeichert werden. Wenn dann in Schritt 22 ein Unfallereignis festgestellt wird, beispielsweise durch Auswerten von Signalen des Unfallsensors 18, wird der Vor-Unfall-Fehlerzustand nicht weiter verändert, sondern festgehalten ("eingefroren"), sodass ein Fehlerbild des Hochvolt-Energiesystems von vor dem Unfall auch nach dem Unfall zur Verfügung steht. In Schritt 23 wird nach dem Unfallereignis der aktuelle Fehlerzustand des Hochvolt-Energiesystems bestimmt. Dieser Fehlerzustand wird nachfolgend als Nach-Unfall-Fehlerzustand bezeichnet werden. Durch Vergleichen des Vor-Unfall-Fehlerzustands mit dem Nach-Unfall-Fehlerzustand kann in Schritt 24 festgestellt werden, ob durch den Unfall zusätzliche Fehler in dem Hochvolt-Energiesystem aufgetreten sind. Wenn keine zusätzlichen Fehler aufgetreten sind, findet keine Deaktivierung des Hochvolt-Energiesystems statt und das Verfahren kann in Schritt 21 fortgesetzt werden. Wenn in Schritt 24 zusätzliche Fehler festgestellt werden, wird das Hochvolt-Energiesystem in Schritt 25 deaktiviert, indem beispielsweise die Deaktivierungsvorrichtung 14 die Hochvoltleitung 13 von dem Energiespeicher 12 trennt und der Antriebsmotor 11 deaktiviert wird. Durch Deaktivieren des Antriebsmotors 11 kann beispielsweise verhindert werden, dass Rekuperationsenergie durch das noch rollende Fahrzeug 10 in das Hochvolt-Energiesystem eingespeist wird.

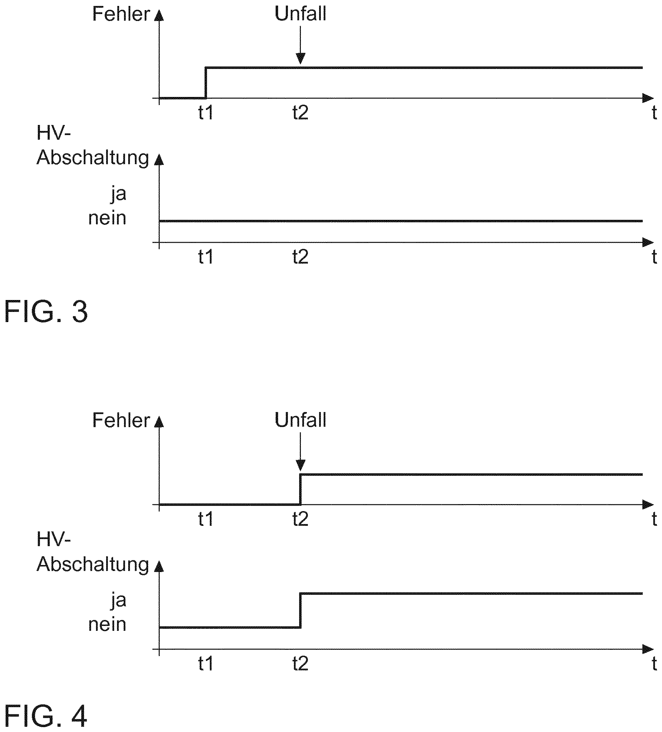

Figuren 3 und 4 veranschaulichen das zuvor beschriebene Verfahren in Form eines Zeitablaufdiagramms. In Fig. 3 tritt ein Fehler des Hochvolt-Energiesystems unabhängig von einem Unfall vor dem Unfall auf. In Fig. 3 tritt zum Zeitpunkt t1 ein Fehler in dem Hochvolt-Energiesystem auf. Da dieser Fehler im normalen Betrieb des Fahrzeugs als geringfügig oder nicht schwerwiegend erachtet wird, erfolgt zum Zeitpunkt t1 keine Abschaltung des Hochvolt-Energiesystems (HV). Zum Zeitpunkt t2 tritt ein Unfallereignis auf. Da der Fehler bereits vor dem Unfall bestanden hat, wird das Hochvolt-Energiesystem zum Zeitpunkt t2 nicht abgeschaltet, sondern bleibt kontinuierlich aktiviert.

In Fig. 4 tritt ein Fehler des Hochvolt-Energiesystems gleichzeitig mit einem Unfall, also vermutlich unfallbedingt, auf. Im Zeitraum von t1 bis t2 liegt kein Fehler vor. Daher erfolgt in diesem Zeitraum auch keine Abschaltung des Hochvolt-Energiesystems. Zum Zeitpunkt t2 tritt ein Unfallereignis ein und gleichzeitig ein Fehler auf. Dementsprechend wird das Hochvolt-Energiesystem zum Zeitpunkt t2 abgeschaltet und bleibt danach kontinuierlich, also irreversibel, abgeschaltet. Der Fehler in dem Beispiel der Fig. 3 kann der gleiche wie der Fehler in dem Beispiel der Fig. 4 sein. Da dieser Fehler in der Fig. 4 gleichzeitig mit dem Unfallereignis auftritt, wird er jedoch als schwerwiegender erachtet und daher das Hochvolt-Energiesystem abgeschaltet.

Zusammenfassend geht man davon aus, dass, wenn erst nach einem Unfallereignis ein Fehler im Hochvolt-Energiesystem auftritt, dieser Fehler durch den Unfall verursacht wurde. Die Zuordnung eines beschädigten Hochvolt-Energiesystems zu einem Unfall ist nur bei gleichzeitiger Verschlechterung des Funktionsstatus des Hochvolt-Energiesystems aussagefähig. Wird nach einem Unfall ein Fehler detektiert, welcher bereits vor dem Unfall vorlag, kann man nicht davon ausgehen, dass dieser Fehler durch den Unfall verursacht wurde. Daher können solche Fehler ignoriert werden. Zusätzlich zum Status des Fehlers wird daher auch die Veränderung des Fehlers ausgewertet. Dazu muss der Status relevanter Fehlereinträge zu einem geeigneten Zeitpunkt, beispielsweise beim Starten des Fahrzeugs, vor dem Unfall gespeichert werden. Dieser gespeicherte Fehlerstatus wird mit dem aktuellen Fehlerstatus nach dem Unfall verglichen.

Im Allgemeinen ist die Einbeziehung mehrerer Fehlerarten möglich, beispielsweise Isolationsfehler, Steckverbindungsfehler, Hochvolt-Interlock-Fehler, Leitungsunterbrechungsfehler und Timeout-Fehler. Durch eine Gruppierung der Fehlerarten kann die Fehlerreaktion von der zuvor beschriebenen Auswertung abweichen. Wenn beispielsweise zwei Fehler gleichzeitig auftreten und dadurch eine Personengefährdung oder Komponentengefährdung besteht, kann das Hochvolt-Energiesystem grundsätzlich, also unabhängig von der Veränderung des Fehlers, oder zusätzlich in Abhängigkeit von der Veränderung des Fehlers abgeschaltet werden.

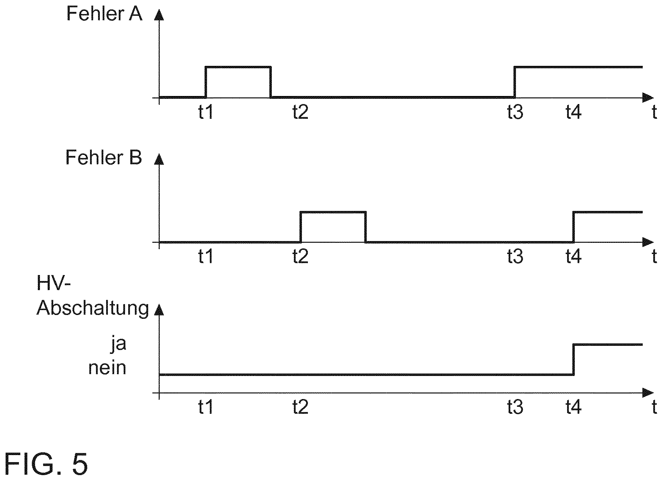

Fig. 5 zeigt, beispielsweise, dass zwei Fehler (Fehler A und Fehler B), wenn sie jeweils einzeln auftreten, nicht zu einer Abschaltung des Hochvolt-Energiesystems führen, jedoch zu einer Abschaltung des Hochvolt-Energiesystems führen, wenn sie zumindest zu einem Zeitpunkt gleichzeitig vorliegen. Im Detail liegt in dem Beispiel der Fig. 5 der Fehler A für kurze Zeit ab dem Zeitpunkt t1 vor und besteht nicht mehr, wenn zum Zeitpunkt t2 der Fehler B vorliegt. Der Fehler B besteht kurze Zeit später nicht mehr. Eine Abschaltung des Hochvolt-Energiesystems findet nicht statt, da jeder der Fehler A und B für sich genommen nicht kritisch ist. Zum Zeitpunkt t3 tritt Fehler A wieder auf und bleibt über den Zeitpunkt t4 hinaus bestehen, zu dem der Fehler B zusätzlich auftritt. Da ab dem Zeitpunkt t4 Fehler A und Fehler B gleichzeitig vorliegen, wird dieser Zustand als kritisch erachtet und das Hochvolt-Energiesystem zum Zeitpunkt t4 abgeschaltet. Fehler A kann beispielsweise ein Isolationsfehler sein und Fehler B ein Kommunikationsfehler zu einer Überwachungsvorrichtung einer Hochvoltkomponente sein. Treten die Fehler getrennt voneinander auf, wird die Gefährdung für Personen und das Fahrzeug jeweils als gering erachtet. Wenn beide Fehler jedoch gleichzeitig auftreten, kann durch den Isolationsfehler beispielsweise ein Kurzschluss auftreten, welcher von der Überwachungsvorrichtung prinzipiell erkannt werden würde. Da jedoch die Kommunikation zur Überwachungsvorrichtung ebenfalls fehlerhaft ist, besteht nun die Gefahr, dass ein Kurzschluss aufgrund des Isolationsfehlers nicht erkannt wird und dadurch ein Fahrzeugbrand entstehen kann oder eine gefährlich hohe Spannung an einer Komponente des Fahrzeugs anliegt, welche von einem Fahrzeugbenutzer berührt werden kann. Daher ist in diesem Doppelfehlerfall eine Abschaltung des Hochvolt-Energiesystems erforderlich.

### Bezugszeichenliste

- 10: Fahrzeug
- 11: Antriebsmotor
- 12: Energiespeicher
- 13: Hochvoltleitung
- 14: Deaktivierungsvorrichtung
- 15: Fehlersensor
- 16: Fehlersensor
- 17: Verarbeitungsvorrichtung
- 18: Unfallsensor
- 20: Verfahren
- 21-25: Schritt

## Patentansprüche

1. Verfahren für ein Hochvoltenergiesystem eines Fahrzeugs, umfassend:
- Bestimmen (22) eines Unfallereignisses, und
- Bestimmen (23) eines Nach-Unfall-Fehlerzustands, welcher aktuell bestehende Fehler des Hochvoltenergiesystems nach einem Zeitpunkt des Unfallereignisses angibt,
**dadurch gekennzeichnet, dass** das Verfahren ferner umfasst:
- Bestimmen (21) eines Vor-Unfall-Fehlerzustands, welcher aktuell bestehende Fehler des Hochvoltenergiesystems vor dem Zeitpunkt des Unfallereignisses angibt, und
- Deaktivieren des Hochvoltenergiesystems in Abhängigkeit von dem Unfallereignis, dem Vor-Unfall-Fehlerzustand und dem Nach-Unfall-Fehlerzustand, wobei das Hochvoltenergiesystem deaktiviert wird, wenn der Nach-Unfall-Fehlerzustand mindestens einen Fehler des Hochvoltenergiesystems angibt, welcher über die Fehler des Vor-Unfall-Fehlerzustands hinausgeht, und wobei das Hochvoltenergiesystem nicht deaktiviert wird, wenn der Fehler des Hochvoltenergiesystems im unfallfreien Betrieb des Fahrzeugs auftritt.

2. Verfahren nach Anspruch 1, **dadurch gekennzeichnet, dass** das Bestimmen (21) des Vor-Unfall-Fehlerzustands umfasst:
- Erfassen aktuell bestehender Fehler des Hochvoltenergiesystems bei einem Starten des Fahrzeugs (10), und/oder
- zyklisches Erfassen aktuell bestehender Fehler des Hochvoltenergiesystems, wobei dem Vor-Unfall-Fehlerzustand die aktuell bestehenden Fehler des Hochvoltenergiesystems zugeordnet werden, welche zu einem Zeitpunkt in einem vorgegebenen zeitlichen Mindestabstand vordem Unfallereignis bestanden.

3. Verfahren nach Anspruch 1 oder 2, **dadurch gekennzeichnet, dass** ein Fehler der aktuell bestehenden Fehler mindestens einen Fehler aus der Gruppe umfasst, welche besteht aus:
- einem Isolationsfehler, welcher einen Fehler in einer elektrischen Isolation einer elektrischen Hochvoltkomponente (11-13) des Hochvoltenergiesystems angibt,
- einem Steckverbindungsfehler, welcher einen Fehler bei einer Steckverbindung angibt, welche eine elektrische Hochvoltkomponente (11-13) des Hochvoltenergiesystems mit einer weiteren elektrischen Hochvoltkomponente (11-13) des Hochvoltenergiesystems koppelt,
- einem Leitungsunterbrechungsfehler, welcher eine Unterbrechung einer Hochvoltleitung (13) des Hochvoltenergiesystems angibt, und
- einem Time-Out-Fehler, welcher anzeigt, dass eine elektrische Hochvoltkomponente (11, 12) nach einer Ansteuerung nicht innerhalb einer vorgegebenen Zeit gemäß der Ansteuerung reagiert.

4. Verfahren nach einem der vorhergehenden Ansprüche, **dadurch gekennzeichnet, dass** das Deaktivieren des Hochvoltenergiesystems umfasst:
- irreversibles Abschalten des Hochvoltenergiesystems derart, dass das Hochvoltenergiesystem nicht mittels einer Bedienung durch einen Benutzer des Fahrzeugs (10) aktivierbar ist, und/oder
- irreversibles Abschalten eines mit dem Hochvoltenergiesystem gekoppelten Antriebsmotors (11) des Fahrzeugs (10) derart, dass der Antriebsmotor (11) nicht mittels einer Bedienung durch einen Benutzer des Fahrzeugs aktivierbar ist.

5. Verfahren nach einem der vorhergehenden Ansprüche, **dadurch gekennzeichnet, dass** das Bestimmen des Unfallereignisses umfasst:
- Erfassen einer Beschleunigung des Fahrzeugs (10), und
- Vergleichen der erfassten Beschleunigung mit einem vorgegebenen Besch leunigungsschwellenwert.

6. Überwachungsvorrichtung für ein Hochvoltenergiesystem eines Fahrzeugs, umfassend:
- einen Unfallsensor (18) zum Bestimmen eines Unfallereignisses,
- mindestens einen Fehlersensor (15, 16) zum Erfassen von aktuell bestehenden Fehlern des Hochvoltenergiesystems, und
- eine Verarbeitungsvorrichtung (17), welche mit dem Unfallsensor (18) und dem Fehlersensor (15, 16) gekoppelt ist und ausgestaltet ist, einen Nach-Unfall-Fehlerzustand zu bestimmen, welcher aktuell bestehende Fehler des Hochvoltenergiesystems nach einem Zeitpunkt des Unfallereignisses angibt,
**dadurch gekennzeichnet, dass** die Verarbeitungsvorrichtung (17) ferner ausgestaltet ist, einen Vor-Unfall-Fehlerzustand, welcher aktuell bestehende Fehler des Hochvoltenergiesystems vor dem Zeitpunkt des Unfallereignisses angibt, zu bestimmen und das Hochvoltenergiesystems in Abhängigkeit von dem Unfallereignis, dem Vor-Unfall-Fehlerzustand und dem Nach-Unfall-Fehlerzustand zu deaktivieren, wobei das Hochvoltenergiesystem deaktiviert wird, wenn der Nach-Unfall-Fehlerzustand mindestens einen Fehler des Hochvoltenergiesystems angibt, welcher über die Fehler des Vor-Unfall-Fehlerzustands hinausgeht, und wobei das Hochvoltenergiesystem nicht deaktiviert wird, wenn der Fehler des Hochvoltenergiesystems im unfallfreien Betrieb des Fahrzeugs auftritt.

7. Überwachungsvorrichtung nach Anspruch 6, **dadurch gekennzeichnet, dass** die Überwachungsvorrichtung zur Durchführung des Verfahrens nach einem der Ansprüche 2-5 ausgestaltet ist.

## Claims

1. A method for a high-voltage energy system of a vehicle, comprising:
- determining (22) an accident event, and
- determining (23) a post-accident fault state which indicates currently existing faults in the high-voltage energy system subsequent to a point in time of the accident event,
**characterized in that** the method further comprises:
- determining (21) a pre-accident fault state which indicates currently existing faults in the high-voltage energy system before the point in time of the accident event, and
- deactivating the high-voltage energy system as a function of the accident event, the pre-accident fault state and the post-accident fault state, wherein the high-voltage energy system is deactivated when the post-accident fault state indicates at least one fault in the high-voltage energy system which goes beyond the faults of the pre-accident fault state, and wherein the high-voltage energy system is not deactivated when the fault in the high-voltage energy system occurs during the accident-free operation of the vehicle.

2. The method according to Claim 1, **characterized in that** the determination (21) of the pre-accident fault state comprises:
- detecting currently existing faults in the high-voltage energy system when the vehicle (10) is started, and/or
- cyclically detecting currently existing faults in the high-voltage energy system, wherein the currently existing faults in the high-voltage energy system which existed at a point in time within a predefined minimum time interval before the accident event are assigned to the pre-accident fault state.

3. The method according to Claim 1 or 2, **characterized in that** one of the currently existing faults comprises at least one fault from the group consisting of:
- an insulation fault which indicates a fault in an electrical insulation of an electrical high-voltage component (11-13) of the high-voltage energy system,
- a plug-in connection fault which indicates a fault in a plug-in connection which couples an electrical high-voltage component (11-13) of the high-voltage energy system to a further electrical high-voltage component (11-13) of the high-voltage energy system,
- a line-break fault which indicates a break in a high-voltage line (13) of the high-voltage energy system, and
- a time-out fault which indicates that, after an activation, an electrical high-voltage component (11, 12) is not responding within a predefined time according to the activation.

4. The method according to any one of the preceding claims, **characterized in that** the deactivation of the high-voltage energy system comprises:
- irreversibly switching off the high-voltage energy system in such a way that the high-voltage energy system cannot be activated by means of an operation on the part of a user of the vehicle (10), and/or
- irreversibly switching off a drive motor (11) of the vehicle (10) coupled to the high-voltage energy system, in such a way that the drive motor (11) cannot be activated by means of an operation on the part of a user of the vehicle.

5. The method according to any one of the preceding claims, **characterized in that** the determination of the accident event comprises:
- detecting an acceleration of the vehicle (10), and
- comparing the detected acceleration to a predefined acceleration threshold value.

6. A monitoring device for a high-voltage energy system of a vehicle, comprising:
- an accident sensor (18) for determining an accident event,
- at least one fault sensor (15, 16) for detecting currently existing faults in the high-voltage energy system, and
- a processing device (17) which is coupled to the accident sensor (18) and the fault sensor (15, 16) and is configured to determine a post-accident fault state which indicates currently existing faults in the high-voltage energy system subsequent to a point in time of the accident event,
**characterized in that** the processing device (17) is further configured to determine a pre-accident fault state which indicates currently existing faults in the high-voltage energy system before the point in time of the accident event, and to deactivate the high-voltage energy system as a function of the accident event, of the pre-accident fault state and of the post-accident fault state, wherein the high-voltage energy system is deactivated when the post-accident fault state indicates at least one fault in the high-voltage energy system which goes beyond the faults in the pre-accident fault state, and wherein the high-voltage energy system is not deactivated when the fault in the high-voltage energy system occurs during the accident-free operation of the vehicle.

7. The monitoring device according to Claim 6, **characterized in that** the monitoring device is configured to carry out the method according to any one of Claims 2 to 5.

## Revendications

1. Procédé pour un système énergétique à haute tension d'un véhicule, comprenant :
- la détermination (22) d'un accident et
- la détermination (23) d'un état de défaut post-accident, lequel indique des défauts actuellement existants du système énergétique à haute tension après un moment de l'accident,
**caractérisé en ce que** le procédé comprend en outre :
- la détermination (21) d'un état de défaut pré-accident, lequel indique des défauts actuellement existants du système énergétique à haute tension avant le moment de l'accident et
- la désactivation du système énergétique à haute tension en fonction de l'accident, de l'état de défaut pré-accident et de l'état de défaut post-accident, le système énergétique à haute tension étant désactivé lorsque l'état de défaut post-accident indique au moins un défaut du système énergétique à haute tension lequel surpasse les défauts de l'état de défaut pré-accident et le système énergétique à haute tension n'étant pas désactivé lorsque le défaut du système énergétique à haute tension se produit durant le fonctionnement sans accident du véhicule.

2. Procédé selon la revendication 1, **caractérisé en ce que** la détermination (21) de l'état de défaut pré-accident comprend :
- la détection de défauts actuellement existants du système énergétique à haute tension lors d'un démarrage du véhicule (10) et/ou
- la détection cyclique de défauts actuellement existants du système énergétique à haute tension, les défauts actuellement existants du système énergétique à haute tension qui existaient à un moment dans un intervalle de temps minimum, prédéfini, avant l'accident étant attribués à l'état de défaut pré-accident.

3. Procédé selon la revendication 1 ou 2, **caractérisé en ce qu'**un défaut des défauts actuellement existants comprend au moins un défaut du groupe constitué de :
- un défaut d'isolation, lequel indique un défaut dans une isolation électrique d'un composant à haute tension électrique (11-13) du système énergétique à haute tension,
- un défaut de connexion enfichable, lequel indique un défaut dans une connexion enfichable, laquelle couple un composant à haute tension électrique (11-13) du système énergétique à haute tension à un autre composant à haute tension électrique (11-13) du système énergétique à haute tension,
- un défaut de coupure de ligne, lequel indique une coupure d'une ligne haute tension (13) du système énergétique à haute tension et
- un défaut de dépassement de délai, lequel indique qu'après une commande, un composant à haute tension électrique (11, 12) ne réagit pas conformément à la commande dans un intervalle de temps prédéfini.

4. Procédé selon l'une quelconque des revendications précédentes, **caractérisé en ce que** la désactivation du système énergétique à haute tension comprend :
- la mise hors tension irréversible du système énergétique à haute tension de telle façon que le système énergétique à haute tension ne peut pas être activé au moyen d'un actionnement par un utilisateur du véhicule (10) et/ou
- la mise hors tension irréversible d'un moteur d'entraînement (11) du véhicule (10) couplé au système énergétique à haute tension de telle façon que le moteur d'entraînement (11) ne peut pas être activé au moyen d'un actionnement par un utilisateur du véhicule.

5. Procédé selon l'une quelconque des revendications précédentes, **caractérisé en ce que** la détermination de l'accident comprend :
- la détection d'une accélération du véhicule (10) et
- la comparaison de l'accélération détectée à une valeur seuil d'accélération prédéfinie.

6. Dispositif de surveillance pour un système énergétique à haute tension d'un véhicule, comprenant :
- un capteur d'accidents (16) pour la détermination d'un accident,
- au moins un capteur de défauts (15, 16) pour la détection de défauts actuellement existants du système énergétique à haute tension et
- un dispositif de traitement (17), lequel est couplé au capteur d'accidents (18) et au capteur de défauts (15, 16) et conçu pour déterminer un état de défaut post-accident, lequel indique des défauts actuellement existants du système énergétique à haute tension après un moment de l'accident,
**caractérisé en ce que** le dispositif de traitement (17) est conçu en outre pour déterminer un état de défaut pré-accident, lequel indique des défauts actuellement existants du système énergétique à haute tension avant le moment de l'accident et pour désactiver le système énergétique à haute tension en fonction de l'accident, de l'état de défaut pré-accident et de l'état de défaut post-accident, le système énergétique à haute tension étant désactivé lorsque l'état de défaut post-accident indique au moins un défaut du système énergétique à haute tension lequel surpasse les défauts de l'état de défaut pré-accident et le système énergétique à haute tension n'étant pas désactivé lorsque le défaut du système énergétique à haute tension se produit durant le fonctionnement sans accident du véhicule.

7. Dispositif de surveillance selon la revendication 6, **caractérisé en ce que** le dispositif de surveillance est conçu pour l'exécution du procédé selon l'une quelconque des revendications 2 à 5.
